# EUROPÄISCHE PATENTANMELDUNG

(11) **EP 2 645 088 A1**
(43) Veröffentlichungstag der Anmeldung: **02.10.2013**
(21) Anmeldenummer: 12161660.1
(22) Anmeldetag: 28.03.2012
(51) Int. Cl.: G01N 21/88, G01B 3/26

(54) **Verfahren zur Bewertung von Fehlstellen in der Oberfläche eines Bauteils**

(71) Anmelder: Siemens Aktiengesellschaft, 80333 München (DE)
(72) Erfinder: Kern, Rene, 12435 Berlin (DE); Sczepurek, Tristan, 13129 Berlin (DE); Sperlich, Kathrin, 10555 Berlin (DE)

(57) **Zusammenfassung**

Die Erfindung betrifft ein Verfahren zur Bewertung von Fehlstellen (1) in der Oberfläche eines Bauteils mit den folgenden Schritten: ein Bauteil mit Fehlstellen (1), insbesondere Rissen (1) in der Oberfläche wird bereitgestellt, wenigstens eine der Fehlstellen (1) wird hinsichtlich ihrer Größe bewertet, wobei die Bewertung erfolgt, indem nacheinander lichtundurchlässige Prüfkörper unterschiedlicher Größe (2, 3, 4, 5, 6, 7, 9, 10, 11) über die Fehlstelle (1) gebracht werden und die Fehlstelle (1) in Abhängigkeit des Prüfkörpers (4, 7, 11), von dem die Fehlstelle (1) gerade vollständig verdeckt wird, klassifiziert wird.

## Beschreibung

Die Erfindung betrifft Verfahren zur Bewertung von Fehlstellen in der Oberfläche eines Bauteils mit den folgenden Schritten:
- ein Bauteil mit Fehlstellen, insbesondere Rissen in der Oberfläche wird bereitgestellt,
- wenigstens eine der Fehlstellen wird hinsichtlich ihrer Größe bewertet.

In vielen technischen Bereichen kommen Bauteile zum Einsatz, die eine Oberfläche hoher Güte aufweisen müssen, die frei von Fehlstellen, insbesondere von Rissen ist. Dies ist beispielsweise für Bauteile von Gasturbinen- oder Windkraftanlagen erforderlich. Um überprüfen zu können, ob ein Bauteil eine fehlerhafte Oberfläche aufweist, haben sich zahlreiche zerstörungsfreie Prüfverfahren etabliert. Neben der visuellen Prüfung (VT), im Rahmen welcher Fehlstellen in der Oberfläche mit dem menschlichen Auge, gegebenenfalls unter Verwendung geeigneter Hilfsmittel, wie Lupen, Kameras oder Endoskope, detektiert werden, haben sich auch die Farbeindringprüfung (PT) sowie die Magnetpulverprüfung (MT) bewährt.

Im Rahmen der Farbeindringprüfung wird zur Fehler-Detektion die zu prüfende Oberfläche des Bauteils zunächst mit einem in der Regel flüssigen Prüfmittel benetzt. Dieses dringt infolge der Kapillarwirkung in die zur Oberfläche hin offenen Fehlstellen, insbesondere Risse ein. Nach einer vorgegebenen Einwirkzeit wird die Oberfläche gereinigt, so dass das überschüssige Prüfmittel von der Oberfläche entfernt wird. Anschließend wird ein Entwickler auf die Oberfläche des Bauteils aufgetragen, durch welchen das Prüfmittel aus den Fehlstellen gezogen wird. Der Entwickler hat üblicherweise eine Farbgebung, die einen hohen Kontrast gegenüber der Farbe des Prüfmittels aufweist (beispielsweise weiß), so dass das herausgezogene Prüfmittel (beispielsweise rot) und damit Fehlstellen in der Oberfläche erkennbar sind.

Alternativ zu dem Farbeindringprüfverfahren kann das sogenannte Magnetpulverprüfverfahren (MT) angewendet werden. Im Rahmen dieses Verfahrens wird in dem zu prüfenden Bereich der Oberfläche des Bauteils ein magnetischer Fluss erzeugt. Befinden sich Fehlstellen in diesem Bereich, so wird der ansonsten gleichmäßige magnetische Fluss infolge der mit der Fehlstelle einhergehenden Materialunterbrechung gestört. Die resultierende Veränderung des Magnetfeldlinienverlaufes kann beispielsweise durch aufgebrachtes Eisenpulver als Prüfmittel sichtbar gemacht werden.

Es hat sich herausgestellt, dass eine besonders gute Detektion bzw. Sichtbarmachung von Fehlstellen in der Oberfläche erzielt werden kann, wenn das Prüfmittel Partikel mit fluoreszierenden Eigenschaften aufweist. In diesem Fall werden Oberflächen-Fehlstellen in der zuvor beschriebenen Art mit einem Prüfmittel versehen und im Anschluss wird UV-Licht auf die Oberfläche des zu prüfenden Bauteils gestrahlt, wodurch das Prüfmittel (im sichtbaren Wellenlängenbereich) infolge des Fluoreszenz-Effektes zum Leuchten gebracht wird und die Fehlstellen somit noch besser zu erkennen sind. Dieser Vorgang erfolgt im Allgemeinen in einer für den Menschen vergleichsweise dunklen Umgebung, damit der fluoreszenzbedingte Leuchteffekt nicht durch das Umgebungslicht überdeckt wird.

Ein Problem im Zusammenhang mit diesem Verfahren ist durch die anschließende Bewertung der mittels des Fluoreszenz-Effektes sichtbar gemachten Fehlstellen gegeben. Es ist bekannt, die sichtbar gemachten Fehler beispielsweise mit Messschiebern zu bewerten bzw. zu vermessen. Da die Bewertung jedoch unter geringer Umgebungsbeleuchtung, in der Regel bei einer Lichtstärke < 20 lx, erfolgen muss, damit das fluoreszierende Prüfmittel und somit die Fehlstelle gut erkennbar ist, stellt sich eine genaue und zuverlässige Bewertung als sehr schwierig dar. Messschieber und -skalen sind für den Prüfer, welcher die Oberfläche untersucht, nur schlecht zu erkennen, und die ermittelten Werte weisen daher eine hohe Ungenauigkeit auf.

Ebenfalls bekannt ist, geeignete Komparatoren für die Bewertung der sichtbar gemachten Fehler einzusetzen. Bei diesen handelt es sich beispielsweise um durchsichtige Kunststoffstreifen, die farbige Markierungen, beispielsweise in Form von Umrissen aufweisen, welche über die sichtbar gemachte, leuchtende Fehlstelle gelegt werden. Da derartige Markierungen unter geringer Umgebungsbeleuchtung - ebenso wie die Fehlstellen - schlecht zu sehen sind, gibt es Komparatoren mit Markierungen, die fluoreszierende Eigenschaften aufweisen. Obwohl die Markierungen dann besser zu erkennen sind, da diese unter Bestrahlung mit UV-Licht - analog zu den Fehlstellen - zum Leuchten gebracht werden, wird an dieser Ausführungsform als nachteilig empfunden, dass sie einen bloßen Vergleich und keine genaue Messung der Fehlstellen ermöglicht und die Bewertung mit vergleichsweise großen Messunsicherheiten verbunden ist.

Ausgehend von diesem Stand der Technik ist es eine Aufgabe der vorliegenden Erfindung, ein Verfahren für die Bewertung von mittels Prüfmittel sichtbar gemachter Fehlstellen in der Oberfläche eines Bauteils anzugeben, welches zügig zu einem verlässlichen Ergebnis führt.

Diese Aufgabe wird bei einem Verfahren der eingangs genannten Art dadurch gelöst, dass die Bewertung erfolgt, indem nacheinander lichtundurchlässige Prüfkörper unterschiedlicher Größe über die Fehlstelle gebracht werden und die Fehlstelle in Abhängigkeit des Prüfkörpers, von dem die Fehlstelle gerade vollständig verdeckt wird, klassifiziert wird.

Mit anderen Worten wählt ein Prüfer, welcher eine Fehlstelle auf einem Bauteil zu klassifizieren beziehungsweise zu bewerten hat, einen Prüfkörper aus einem Satz von Prüfkörpern unterschiedlicher und eindeutig bestimmter Größe aus und bringt diesen über die Fehlstelle. Die Prüfkörper weisen für die Bewertung eine Seite, insbesondere Stirnseite auf, deren Abmessung eindeutig bestimmt ist. Der Prüfkörper wird so über die Fehlstelle gebracht, dass die Seite bzw. Stirnseite eindeutig bestimmter Größe im Bereich der zu bewertenden Fehlstelle in flächigen Kontakt mit der Oberfläche des Bauteils positioniert ist, wobei der Prüfkörper dann insbesondere senkrecht zu der Oberfläche ausgerichtet ist. Der Prüfkörper wird für die Bewertung der Fehlstelle zweckmäßiger Weise zentriert über diese gebracht.

Die Prüfkörper sind aus einem Material gefertigt, welches für Licht in dem für das menschliche Auge sichtbaren Wellenlängenbereich undurchlässig ist. Ein geeignetes Material ist beispielsweise Metall, insbesondere Edelstahl. Alternativ können auch andere Materialien, z.B. nicht transparente Kunststoffe für die Fertigung der Prüfkörper verwendet werden. Aufgrund der lichtundurchlässigen Eigenschaft des Prüfkörpers kann der Prüfer den durch den Prüfkörper verdeckten Bereich der Fehlstelle nicht mehr sehen.

Anschließend wird überprüft, ob der Prüfkörper die Fehlstelle gänzlich oder teilweise verdeckt. Dazu muss er die verdeckte Fehlstelle von allen Seiten untersuchen. Kommt der Prüfer zu dem Ergebnis, dass der gewählte Prüfkörper die Fehlstelle nur teilweise verdeckt, so erfolgt keine Klassifizierung, sondern der Prüfer entfernt den Prüfkörper von der Fehlstelle und wählt einen Prüfkörper mit größeren Abmessungen aus dem Satz von Prüfkörpern aus. Die Prüfkörper müssen sich dabei hinsichtlich der Größe der Seiten, insbesondere Stirnseiten unterscheiden, welche jeweils von dem Prüfer zur Bewertung in flächigen Kontakt mit der Fehlstelle bzw. unmittelbar über diese gebracht werden. Um welchen Betrag sich die Größen der gewählten Prüfkörper jeweils voneinander unterschieden, hängt davon ab, wie exakt die Klassifizierung der Fehlstelle gewünscht ist, da der Größenunterschied der Prüfkörper die erreichbare Genauigkeit der Bewertung der Fehlstelle bestimmt.

Der Prüfer bringt den weiteren Prüfkörper über die zu bewertende Fehlstelle und ermittelt wiederum, ob er noch Bereiche der Fehlstelle sehen kann. Dieser Vorgang wird so lange von dem Prüfer wiederholt, bis eine gerade vollständige Verdeckung der Fehlstelle erzielt wird.

Dabei kann der Prüfer auf unterschiedliche Weise vorgehen. Er kann insbesondere nacheinander Prüfkörper ansteigender Größe verwenden. Der Prüfer kann beispielsweise zunächst die Größe der Fehlstelle mit bloßem Auge grob abschätzen und als ersten Prüfkörper einen Prüfkörper wählen, dessen Größe die der Fehlstelle voraussichtlich unterschreitet. Dies verifiziert er durch Verdeckung der Fehlstelle und für den Fall, dass diese tatsächlich größer ist, als der Prüfkörper, wählt er als nächstes einen größeren Prüfkörper aus. Und wiederholt den Vorgang so lange, bis er von der Fehlstelle nichts mehr sieht.

Alternativ kann er mit einem Prüfkörper beginnen, der voraussichtlich größer ist, als die Fehlstelle, wobei er dann nacheinander Prüfkörper mit abnehmender Größe über die Fehlstelle bringt. Bei dieser Vorgehensweise ist es vorteilhaft, wenn der Prüfer so lange Prüfkörper absteigender Größe über die Fehlstelle bringt, bis diese von einem Prüfkörper gerade nicht vollständig verdeckt wird. Die Fehlstelle wird dann in Abhängigkeit des vorletzten Prüfkörpers bewertet, da sicher gestellt ist, dass dieser die Fehlstelle gerade vollständig verdeckt hat.

Ist der Prüfkörper bestimmt worden, durch den die Fehlstelle gerade vollständig verdeckt wird, so erfolgt die Klassifizierung der Fehlstelle, wobei dies insbesondere bedeutet, dass der Fehlstelle die Größe des Prüfkörpers, durch den die Fehlstelle gerade vollständig verdeckt wurde, zugewiesen wird. Die Größenzuordnung muss dabei nicht unmittelbar erfolgen, sondern es kann auch ein geeignetes Kodierungssystem verwendet werden.

Da das erfindungsgemäße Verfahren vollständig manuell angewandt werden kann, ist es besonders geeignet, wenn beispielsweise geringe Stückzahlen stark unterschiedlich geformter Bauteil hinsichtlich ihrer Fehlstellen zu bewerten sind. In diesem Fall ist ein vollständig automatisiertes Bewertungs-Verfahren nur mit unverhältnismäßig hohem Aufwand zu realisieren.

Alternativ kann das erfindungsgemäße Verfahren selbstverständlich auch im Rahmen einer voll automatisierten Bewertung von Fehlstellen angewendet werden, wenn beispielsweise eine hohe Stückzahl identischer Bauteile zu prüfen ist.

In besonders vorteilhafter Ausgestaltung der Erfindung ist vorgesehen, dass die Fehlstelle vor deren Bewertung, insbesondere unter Anwendung des Farbeindring- oder Magnetpulverprüfverfahrens, mit einem Prüfmittel versehen worden ist, um die Fehlstelle sichtbar zu machen. Durch das aufgebrachte Prüfmittel kann der Prüfer auf besonders einfachem Wege erkennen, ob die Fehlstelle von dem Prüfkörper gänzlich oder nur teilweise verdeckt wird. Dafür weist das Prüfmittel vorteilhafter Weise eine Farbe auf, die sich durch einen hohen Kontrast gegenüber der Bauteil-Oberfläche auszeichnet. In an sich bekannter Weise kann auch ein Entwickler mit einer Farbgebung verwendet werden, die einen hohen Kontrast gegenüber der Farbe des Prüfmittels aufweist.

Für die Sichtbarmachung der Fehlstellen wird vorzugsweise ein Prüfmittel verwendet, welches fluoreszierende Partikel enthält und das Bauteil wird für die Bewertung der Fehlstellen mit elektromagnetischer Strahlung, insbesondere UV-Licht bestrahlt, so dass die fluoreszierenden Partikel Licht in einem für das menschliche Auge sichtbaren Wellenlängenbereich emittieren.

Werden die Fehlstellen mittels eines fluoreszierende Partikel enthaltenden Prüfmittels und anschließender Bestrahlung mit UV-Licht sichtbar gemacht, kann die erfindungsgemäße Klassifizierung mittels Prüfkörper besonders zuverlässig und auf einfachem Wege erfolgen. Die teilweise Verdeckung einer Fehlstelle, die aufgrund des Fluoreszenz-Effektes Licht im sichtbaren Wellenlängenbereich emittiert, durch einen Prüfkörper kann von dem Prüfer besonders gut erkannt werden. Auch wenn die Fehlstelle nur in minimalem Maße größer ist als der gewählte Prüfkörper, so dass von der Fehlstelle nur Randbereiche unverdeckt bleiben, deren Fläche beispielsweise weniger als einigen 1000 µm² beträgt, können die - leuchtenden - unverdeckten Bereiche von dem Prüfer mit bloßem Auge trotz ihrer geringen Ausdehnung gut erkannt werden. Dies gilt insbesondere für den Fall, dass die Umgebungsbeleuchtung sehr gering ist, was im Rahmen der Fehlstellen-Bewertung unter Verwendung von fluoreszierende Partikel enthaltendem Prüfmittel in der Regel der Fall ist. Bei geringer Umgebungsbeleuchtung, bei der bekannte Verfahren gerade an die Grenzen ihrer Anwendbarkeit stoßen und mittels dieser Verfahren eine Bewertung der Fehlstelle nur mit hoher Messunsicherheit erfolgen kann, liefert das erfindungsgemäße Verfahren sehr zuverlässige Ergebnisse, die schnell erhalten werden.

Eine Ausführungsform der vorliegenden Erfindung zeichnet sich dadurch aus, dass nacheinander Prüfkörper eines kreisförmigen Querschnitts, insbesondere Prüfstifte mit ansteigendem bzw. absteigendem Durchmesser über die Fehlstelle gebracht werden. Der kreisförmige Querschnitt ist besonders geeignet, um Fehlstellen beliebiger Form zu bewerten. Es kann ein besonders reproduzierbares Messergebnis erhalten werden, da durch die runde Form gewährleistet wird, dass keine Messabweichungen durch ein unterschiedliches Auflegen der Prüfkörper auf die Fehlstellen verursacht werden.

Dabei kann der Prüfkörper insbesondere als Prüfstift mit einer im Wesentlichen zylindrischen Form ausgebildet sein. Stiftförmige Prüfkörper können von dem Prüfer sicher gegriffen und komfortabel über die Fehlstelle gebracht werden - auch wenn diese einen vergleichsweise geringen Durchmesser aufweisen. Die Prüfstifte weisen für die gute Händelbarkeit durch einen Prüfer vorteilhafter Weise eine Länge von wenigstens 2 cm, insbesondere 4 cm auf. Es können auch geeignete Halter zum Einsatz kommen, über welche der Prüfkörper komfortabel und sicher von dem Prüfer gehalten werden können.

Gemäß einer weiteren Ausführungsform der Erfindung ist vorgesehen, dass nacheinander Prüfkörper eines rechteckigen Querschnitts mit ansteigender bzw. absteigender Breite und/oder Länge über die Fehlstelle gebracht werden. Ist die Seite bzw. Stirnseite des Prüfkörpers, die zur Bewertung über die Fehlstelle gebracht wird rechteckig ausgebildet, können insbesondere Fehlstellen auf einfachem Wege bewertet werden, deren Breite und Länge deutlich voneinander abweicht. Dazu können insbesondere Prüfkörper verwendet werden, deren rechteckiger Querschnitt eine Länge und Breite aufweist, die deutlich voneinander abweichen. Die rechteckige Ausgestaltung der Prüfkörper kann jedoch zu einer höheren Messunsicherheit führen. Werden die Prüfkörper ansteigender Größe nicht immer exakt gleich über der Fehlstelle ausgerichtet, so können durch den Messvorgang bedingte Messunsicherheiten auftreten.

In vorteilhafter Ausgestaltung der Erfindung ist vorgesehen, dass Prüfkörper verwendet werden, die hinsichtlich ihrer Größe kalibriert, insbesondere geeicht sind. Kommen Prüfkörper zum Einsatz, deren Abmessungen kalibriert bzw. geeicht sind, so zeichnet sich die erfindungsgemäße Bewertung der Fehlstellen durch eine besonders hohe Präzision aus.

Ein weiteres Ausführungsbeispiel der vorliegenden Erfindung zeichnet sich dadurch aus, dass ein Prüfkörper verwendet wird, dessen Größe einer kritischen Größe einer Fehlstelle entspricht und das Bauteil als unbrauchbar klassifiziert wird, wenn der Prüfkörper die Fehlstelle nicht gänzlich verdeckt. Ist zu beurteilen, ob ein Bauteil weiter verwendet werden kann, oder aber unbrauchbar ist, weil es Fehlstellen aufweist, deren Größe oberhalb eines zulässigen Wertes liegt, so wird ein Prüfkörper verwendet, dessen Größe dem Maximalwert der noch zulässigen Fehlstellen-Größe entspricht. Der Prüfkörper wird über der Fehlstelle positioniert und das Bauteil wird als brauchbar klassifiziert, wenn der Prüfkörper die Fehlstelle gänzlich verdeckt und als unbrauchbar, wenn die Fehlstelle teilweise noch zu erkennen ist.

Hinsichtlich weiterer vorteilhafter Ausgestaltungen und Weiterbildungen der Erfindung wird auf die Unteransprüche sowie nachfolgende Beschreibung eines Ausführungsbeispiel unter Bezugnahme auf die beiliegende Zeichnung verwiesen. In der Zeichnung zeigt:
- Fig. 1 - 4: die erfindungsgemäße Bewertung einer Fehlstelle in der Oberfläche eines Bauteils mit einem Prüfkörper runden Querschnitts in vier Schritten;
- Fig. 5: einen Prüfkörper runden Querschnitts in perspektivischer Darstellung;
- Fig. 6 - 9: die erfindungsgemäße Bewertung der in Figur 1 gezeigten Fehlstelle in der Oberfläche eines Bauteils mit einem Prüfkörper rechteckigen Querschnitts in vier Schritten;
- Fig. 10: einen Prüfkörper rechteckigen Querschnitts in perspektivischer Darstellung;
- Fig. 11 - 14: die erfindungsgemäße Bewertung einer weiteren Fehlstelle in der Oberfläche eines Bauteils mit einem Prüfkörper rechteckigen Querschnitts in vier Schritten.

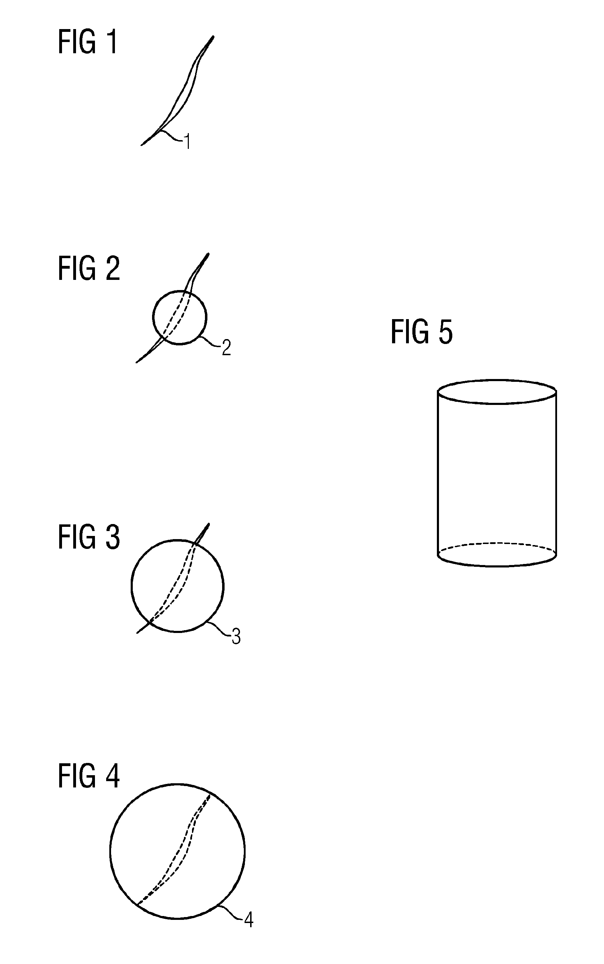

In den Figuren 1 bis 4 ist die erfindungsgemäße Bewertung einer Fehlstelle in der Oberfläche eines Bauteils mittels eines Prüfkörpers runden Querschnitts in vier Schritten gezeigt.

In Figur 1 ist schematisch eine Fehlstelle, hier ein länglicher Riss 1 dargestellt, der sich in der Oberfläche eines zu prüfenden Bauteils befindet. Das Bauteil, welches in der Zeichnung nicht weiter dargestellt ist, wurde unter Anwendung des Farbeindring-Prüfverfahrens präpariert, wobei der Riss 1 zur Sichtbarmachung mit einem Prüfmittel versehen worden ist. Das Prüfmittel enthält fluoreszierende Partikel und die zu prüfende Oberfläche des Bauteils wird für die in den Figuren 1 bis 4 dargestellte Bewertung des Risses 1 mit UV-Licht bestrahlt, so dass die fluoreszierenden Partikel in dem Prüfmittel Licht in einem für das menschliche Auge sichtbaren Wellenlängenbereich emittieren. Die Bewertung des auf diese Weise zum Leuchten gebrachten Risses 1 erfolgt unter einer geringen Umgebungsbeleuchtung von ≤ 20 lx.

Um den Riss 1 hinsichtlich seiner Größe zu bewerten, wählt ein Prüfer von Hand einen Prüfkörper mit einem runden Querschnitt, hier einen zylindrischen Prüfstift 2 aus einem Satz von Prüfstiften aus. Der Durchmesser aller Prüfstifte in dem Satz ist kalibriert. Vorliegend sind Prüfstifte mit Durchmessern von 0,3 - 6,0 mm in Abstufungen von 0,1 mm vorgesehen. Die Prüfstifte weisen alle eine Länge von etwa 2,5 cm auf. Für die Auswahl eines geeigneten Prüfkörpers schätzt der Prüfer zunächst mit bloßem Auge die Größe des Risses 1 grob ab und wähl einen Prüfstift 2, welcher voraussichtlich eine geringere Größe aufweist, als der Riss 1.

Der Prüfstift 2 wird von dem Prüfer manuell über den Riss 1 gebracht, dass die Stirnseite mit dem kalibrierten Durchmesser im Bereich des Risses 1 in flächigen Kontakt mit der Oberfläche des Bauteils gebracht wird, wie in Figur 2 dargestellt ist. Der Prüfstift 2 wird für die Bewertung des Risses 1 dabei möglichst zentriert über dem Riss 1 positioniert. Der Prüfstift 2 ist hier aus Edelstahl gefertigt und somit undurchlässig für das von den fluoreszierenden Partikeln in dem Prüfmittel emittierte sichtbare Licht. Aufgrund dieser Eigenschaft des Prüfstiftes 2 wird der Riss 1 von dem Prüfstift 2 teilweise verdeckt, und der Prüfer kann den verdeckten Bereich des Risses 1 bzw. das von diesem Bereich aufgrund des Fluoreszenz-Effektes emittierte sichtbare Licht nicht mehr sehen. Da der Riss 1 durch den Prüfstift 2 nicht vollständig verdeckt wird, erfolgt keine Bewertung des Risses 1, sondern der Prüfer entfernt den Prüfstift 2 von dem Riss 1 und wählt anschließend einen Prüfstift 3 mit größerem Durchmesser aus dem Satz von Prüfstiften aus. Wie in Figur 3 zu erkennen, bringt er diesen Prüfstift 3 analog zum vorangegangenen Prüfstift 2 möglichst zentriert über den Riss 1. Da auch von diesem Prüfstift 3 der Riss 1 nicht vollständig verdeckt wird, entfernt der Prüfer auch diesen Prüfstift 3, ohne dass eine Bewertung des Risses 1 erfolgt.

Der Prüfer wählt im Anschluss einen weiteren Prüfstift 4 aus, der wiederum einen größeren Durchmesser als der zuvor verwendete Prüfstift 3 aufweist, und bringt diesen über den Riss 1. Der Prüfstift 4 verdeckt - wie in Figur 4 gut erkennen ist - den Riss 1 gerade vollständig, so dass nun die Bewertung des Risses 1 erfolgt. Dazu wird dem Riss 1 der Durchmesser des Prüfkörpers 4 zugewiesen, so dass die Größe des Risses 1 auf diesem Wege bestimmt ist.

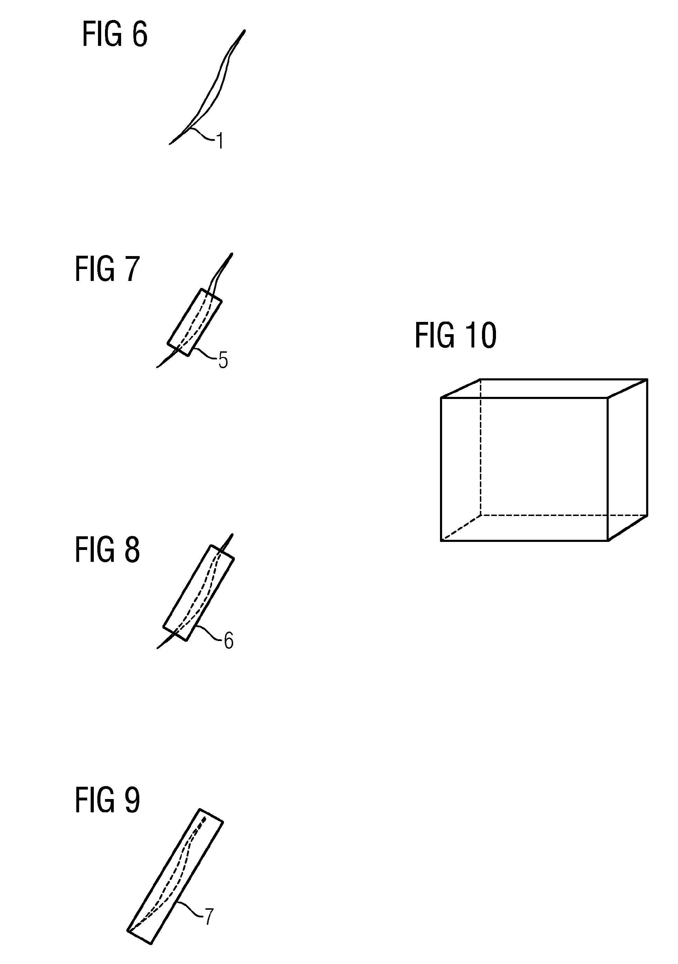

In der Figur 6 ist der Riss aus Figur 1 dargestellt, wobei der Riss 1 hier jedoch alternativ zu Figur 1 mit Prüfkörpern rechteckigen Durchmessers bewertet wird. Die Verfahrensschritte für die Bewertung sind analog zu den in den Figuren 1 bis 4 dargestellten.

Der erste Prüfkörper 5 wird von dem Prüfer ebenfalls so aus einem Satz kalibrierter rechteckiger Prüfkörper ausgewählt, dass er nach Schätzung des Prüfers eine geringere Größe aufweist, als der zu bewertende Riss 1. Der Prüfkörper 5 ist hier erheblich länger als breit - also der länglichen Form des Risses 1 angepasst - und wird für die Bewertung des Risses ebenfalls möglichst zentriert über den Riss 1 gebracht, wobei er zweckmäßiger Weise so orientiert wird, dass seine Längsachse in etwa parallel zu der Längsachse des Risses 1 verläuft, wie in Figur 7 gut zu erkennen ist. Da der Prüfkörper 5 zu klein ist, wählt der Prüfer einen längeren Prüfkörper 6 aus und bringt diesen - wie in Figur 8 dargestellt - in gleicher Weise über den Riss 1. Nach einem weiteren Durchgang wird der Riss 1, wie in Figur 9 gut zu erkennen ist, durch den dritten Prüfkörper 7 vollständig verdeckt. Der Riss 1 wird in Abhängigkeit dieses Prüfkörpers 7 bewertet, wobei dem Riss 1 zur Bewertung die Länge des Prüfkörpers zugeordnet wird.

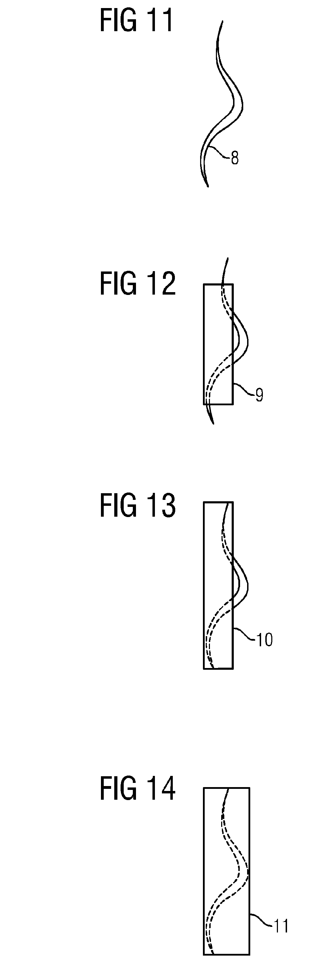

Die Figur 11 zeigt einen weiteren Riss 8, dessen Form von dem in den Figuren 1 bis 4 und 6 bis 9 dargestellten Riss 1 abweicht. Der Riss 8 weist auch eine nicht zu vernachlässigende Breite auf. Zur Bewertung wird zunächst - analog zu Figur 7 - ein von dem Prüfer gewählter rechteckiger Prüfkörper 9 über den Riss 8 gebracht. Da dieser zu klein ist, wählt der Prüfer einen weiteren Prüfkörper 10 aus, der sich durch eine größere Länge auszeichnet. Da der Prüfkörper 10 - wie in Figur 13 zu erkennen ist - den Riss 8 in Längsrichtung gerade vollständig verdeckt, muss für die Bewertung der Größe des Risses in dessen Längsrichtung kein weiterer Prüfkörper aufgelegt werden. Der Prüfkörper 10 verdeckt den Riss 8 jedoch nicht über seine Breite. Dies erkennt der Prüfer und wählt im nächsten Schritt einen Prüfkörper 11 aus, der die gleiche Länge aufweist, wie der vorangegangene Prüfkörper 10, jedoch breiter ist. Wie in Figur 14 dargestellt, verdeckt der Prüfkörper 11 den Riss 8 in Längs- und Querrichtung gerade vollständig, so dass der Riss 8 in Abhängigkeit des Prüfkörpers 11 bewertet wird. Dabei wird die Länge des Prüfkörpers 11 der Länge des Risses 8 und die Breite des Prüfkörpers 11 der Breite des Risses zugeordnet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Bewertung von Fehlstellen (1) in der Oberfläche eines Bauteils mit den folgenden Schritten:
- ein Bauteil mit Fehlstellen (1), insbesondere Rissen (1) in der Oberfläche wird bereitgestellt,
- wenigstens eine der Fehlstellen (1) wird hinsichtlich ihrer Größe bewertet,
**dadurch gekennzeichnet, dass**
die Bewertung erfolgt, indem nacheinander lichtundurchlässige Prüfkörper unterschiedlicher Größe (2, 3, 4, 5, 6, 7, 9, 10, 11) über die Fehlstelle (1) gebracht werden und die Fehlstelle (1) in Abhängigkeit des Prüfkörpers (4, 7, 11), von dem die Fehlstelle (1) gerade vollständig verdeckt wird, klassifiziert wird.

2. Verfahren nach Anspruch 1,
**dadurch gekennzeichnet, dass**
die Fehlstelle (1) vor deren Bewertung, insbesondere unter Anwendung des Farbeindring- oder Magnetpulverprüfverfahrens, mit einem Prüfmittel versehen worden ist, um die Fehlstelle (1) sichtbar zu machen.

3. Verfahren nach Anspruch 2,
**dadurch gekennzeichnet, dass**
ein Prüfmittel verwendet wird, welches fluoreszierende Partikel enthält und das Bauteil für die Bewertung der Fehlstellen (1) mit elektromagnetischer Strahlung, insbesondere UV-Licht bestrahlt wird, so dass die fluoreszierenden Partikel Licht in einem für das menschliche Auge sichtbaren Wellenlängenbereich emittieren.

4. Verfahren nach einem der vorhergehenden Ansprüche,
**dadurch gekennzeichnet, dass**
nacheinander Prüfkörper eines kreisförmigen Querschnitts (2, 3, 4), insbesondere Prüfstifte (2, 3, 4) mit ansteigendem bzw. absteigendem Durchmesser über die Fehlstelle (1) gebracht werden.

5. Verfahren nach einem der Ansprüche 1 bis 3,
**dadurch gekennzeichnet, dass**
nacheinander Prüfkörper eines rechteckigen Querschnitts (5, 6, 7, 9, 10, 11) mit ansteigender bzw. absteigender Breite und/oder Länge über die Fehlstelle gebracht werden.

6. Verfahren nach einem der vorhergehenden Ansprüche,
**dadurch gekennzeichnet, dass**
Prüfkörper (2, 3, 4, 5, 6, 7, 9, 10, 11) verwendet werden, die hinsichtlich ihrer Größe kalibriert, insbesondere geeicht sind.

7. Verfahren nach einem der vorhergehenden Ansprüche,
**dadurch gekennzeichnet, dass**
ein Prüfkörper verwendet wird, dessen Größe einer kritischen Größe einer Fehlstelle (1) entspricht und das Bauteil als unbrauchbar klassifiziert wird, wenn der Prüfkörper die Fehlstelle (1) nicht gänzlich verdeckt.
